# FASCICULE DE BREVET EUROPEEN

(11) **EP 2 739 828 B1**
(45) Date de publication et mention de la délivrance du brevet: **14.10.2015**
(21) Numéro de dépôt: 12750468.6
(22) Date de dépôt: 02.08.2012
(51) Int. Cl.: F01D 5/32, F04D 29/32

(54) **ROUE À AUBES DE TURBOMACHINE**
LAUFRAD FÜR EINEN TURBINENMOTOR
TURBINE ENGINE BLADED ROTOR

(30) Priorité: 03.08.2011 FR 1157123
(43) Date de publication de la demande: 11.06.2014
(73) Titulaire: SNECMA, 75015 Paris (FR)
(72) Inventeur: CHATENET, Luc, Henri, F-77550 Moissy Cramayel Cedex (FR); LE QUELLEC, John, F-77550 Moissy Cramayel Cedex (FR)
(74) Mandataire: Robert, Mathias
(86) Numéro de dépôt international: PCT/FR2012/051830
(87) Numéro de publication internationale: WO 2013/017805

(56) Documents cités:
- EP-A1- 1 693 551
- EP-A2- 1 209 322
- DE-A1- 3 236 021
- FR-A1- 2 746 456
- JP-A- 1 069 702
- JP-A- 1 237 304
- JP-A- 61 129 405
- JP-A- 2007 120 460
- US-A1- 2010 189 564

## Description

La présente invention concerne une roue à aubes de turbomachine et plus particulièrement une roue de soufflante d'une turbomachine telle qu'un turboréacteur ou un turbopropulseur d'avion.

Une roue de soufflante comprend classiquement un disque portant à sa périphérie externe des aubes ayant des pieds qui sont engagés dans des alvéoles sensiblement axiaux de la périphérie externe du disque. Les aubes de soufflante sont maintenues radialement sur le disque par coopération de formes de leurs pieds avec les alvéoles du disque, les pieds d'aubes étant par exemple du type en queue d'aronde. Des plates-formes font partie intégrante du disque. Des aubes de ce type sont par exemple décrites dans le document FR 2 881 174, au nom de la Demanderesse. Les alvéoles peuvent être droits ou curvilignes et les surfaces de contact entre les pieds des aubes et la paroi interne des alvéoles sont appelées portées.

Les aubes sont montées avec un jeu entre leurs pieds et les parois des alvéoles. Afin de réduire ce jeu, il a été proposé que des cales élastiques soient montées entre le fond des alvéoles et les pieds d'aubes, de façon à ce que ces derniers soient maintenus radialement en appui sur les portées du disque.

Ces cales doivent être de grande précision afin que les aubes soient maintenues sans être complètement bloquées dans une position qui ne permettrait pas l'appui normal des pieds d'aubes sur les portées des alvéoles.

Ce type de roue à aubes présente les inconvénients exposés ci-après.

La rotation de la roue à aubes lors du fonctionnement de la turbomachine applique aux aubes des efforts centrifuges importants, qui les maintiennent dans leur position dite de fonctionnement. A titre d'exemple, une aube de soufflante d'environ 4,5 kg peut être soumise à une force supérieure à 60 tonnes.

Dans le cas d'une roue de soufflante notamment, après montage des aubes de la roue, on mesure le balourd apparaissant lors de la rotation de la roue. Si ce balourd est supérieur à un seuil déterminé, on démonte et on intervertit certaines des aubes afin de réduire le balourd.

En l'absence de cale ou lorsque les cales sont insuffisamment précontraintes, à chaque arrêt, la roue à aubes se trouve dans une position angulaire différente et les aubes peuvent changer de position sous l'effet de leur poids propre. Dans ce cas, comme les positions des aubes et donc le balourd de la roue à aubes sont différents d'un démarrage à l'autre, la mesure et la réduction du balourd sont difficilement réalisables.

En outre, les déplacements de faible amplitude et sous fortes charges des aubes, qui se produisent à chaque démarrage de la turbomachine, usent la surface interne des alvéoles de montage des pieds d'aube. Il s'agit d'une usure par « fretting », qui peut empêcher le contrôle de l'intégrité du disque et des aubes par courants de Foucault, ce qui peut conduire au rebut d'un disque et/ou des aubes qui seraient normalement encore utilisables.

De plus, quand les aubes de soufflante sont réalisées en matériau composite, il n'est pas possible de monter les calés en contraignant trop fortement les pieds d'aubes, ceux-ci ne pouvant pas supporter de telles contraintes.

La demande de brevet FR 11/54301, au nom de la Demanderesse et non encore publiée, décrit une roue à aubes de turbomachine, comprenant un disque et des cales montées entre les pieds d'aubes et les fonds des alvéoles du disque. Les cales sont du type bistable en position et peuvent occuper une première position stable de montage ou de démontage dans laquelle elles n'exercent pas d'effort sur les pieds d'aubes et une seconde position stable dans laquelle elles exercent un effort radial sur les pieds d'aubes pour immobiliser les aubes et les stabiliser dans une position finale.

De cette manière, il est possible de monter les cales dans une première position et les aubes dans les alvéoles du disque, de faire tourner le disque à une vitesse suffisante pour que les cales et les aubes prennent leurs positions définitives, en déformant chaque cale afin qu'elle passe de sa première position à sa seconde position, les aubes étant ensuite maintenues en position finale par les cales, même lorsque le disque est à l'arrêt ou à faible vitesse.

Pour des roues à aubes de compresseur basse pression ou haute pression d'une turbomachine, une première mise en rotation de la roue est effectuée à une vitesse de 2500 à 4000 tours par minute, de façon à provoquer la déformation des cales. Simultanément, on réalise une rectification à grande vitesse du sommet des aubes. On procède ensuite à l'équilibrage de la roue à aubes à basse vitesse, sans démontage des aubes.

L'utilisation des cales à mémoire de forme est également connue documents DE 3 236 021 et JP 2007120460.

Dans le cas d'aubes de grandes tailles, telles notamment que les aubes de soufflante, la solution proposée dans le document FR 11/54301 présente les inconvénients exposés ci-après.

La roue de soufflante est entourée par un carter de soufflante dont la surface interne comporte un matériau abradable, les extrémités radialement externes des aubes venant affleurer la surface interne du carter.

Compte tenu de la taille des aubes, les déplacements des extrémités radialement externes des aubes peuvent être importants lors de la première mise en rotation de la roue. Ces extrémités peuvent donc dégrader de façon importante le matériau abradable du carter.

Or, pour des roues de soufflante notamment, il n'est pas envisagé de procéder à la mise en rotation de la roue sans carter.

En outre, en cas d'ingestion d'un oiseau ou d'un objet de taille significative, les aubes de soufflante sont soumises à des chocs violents provoquant leur basculement. Ces chocs doivent être amortis et le basculement des aubes doit être limité.

Or, la cale bistable de l'art antérieur peut, dans certains cas, se révéler insuffisante pour amortir l'énergie du choc et pour limiter le déplacement de l'aube.

Enfin, une possibilité consiste à utiliser des disques aubagés monoblocs, dans lesquels les aubes et le disque sont réalisés de façon monobloc par usinage.

Cette solution n'est cependant pas applicable à tous les rotors, notamment en raison des contraintes thermiques, des contraintes mécaniques et des contraintes de poids, et présente des coûts de réalisation et de maintenance très élevés.

L'invention a notamment pour but d'apporter une solution simple, efficace et économique aux problèmes précités.

A cet effet, elle propose une roue à aubes de turbomachine conformément à la revendication 1, comprenant un disque dont la périphérie externe est formée avec des alvéoles de montage des pieds des aubes, une cale étant montée entre chaque pied d'aube et le fond de l'alvéole, la cale comportant au moins un organe du type bistable en position et qui peut occuper une première position stable de montage ou de démontage dans laquelle il n'exerce pas d'effort sur le pied d'aube et une seconde position stable dans laquelle il exerce un effort radial sur le pied d'aube pour immobiliser l'aube et la stabiliser dans une position finale, caractérisée en ce que la cale comporte en outre au moins un organe élastique d'amortissement monté entre le fond de l'alvéole et le pied d'aube, le pied d'aube étant destiné à venir en appui contre ledit organe élastique d'amortissement, au moins avant que l'organe bistable soit dans sa seconde position.

Lors du montage de la cale, l'organe élastique d'amortissement est comprimé entre le fond de l'alvéole et le pied d'aube, de façon à maintenir ce dernier avant la première mise en rotation. Une fois que cette première rotation est effectuée, l'organe bistable est dans sa seconde position et maintient efficacement l'aube en position.

Grâce à la présence de l'organe élastique d'amortissement, le déplacement de l'aube est fortement limité lors de cette première mise en rotation, ce qui évite les dégradations du matériau abradable du carter.

En cas de choc sur l'aube, provoqué par l'ingestion d'un oiseau ou d'un corps solide, l'organe bistable n'est pas nécessairement capable d'encaisser la totalité de l'énergie du choc et de limiter le déplacement de l'aube mais cette fonction rôle peut être remplie par l'organe élastique d'amortissement.

Selon une autre caractéristique de l'invention, la cale comporte un support de forme allongée, présentant au moins une première zone dans laquelle est monté l'organe élastique d'amortissement et une seconde zone dans laquelle est montée une lame élastique bistable, déformable entre les deux positions précitées.

En particulier, le support présente, dans sa deuxième zone, une section en forme générale de U, comportant une base tournée du côté du fond de l'alvéole et à partir de laquelle s'étendent deux branches, la lame élastique étant fixée par ses extrémités auxdites branches.

La lame élastique ne prend donc pas appui sur les parois de l'alvéole, mais sur le support. On évite ainsi toute dégradation prématurée du disque.

De préférence, la lame élastique comporte une masselotte.

La masselotte peut être dimensionnée afin d'ajuster précisément la vitesse de rotation au-delà de laquelle s'effectue le passage de la première à la seconde position stable.

Les branches du support peuvent comporter des évidements ou des fentes de manière à limiter leur raideur.

En outre, l'organe bistable peut être réalisé dans un matériau à mémoire de forme, déformable par sollicitation mécanique, thermique ou électrique.

La cale peut alors être déformée d'une position stable à une autre par une sollicitation adaptée.

Selon une autre caractéristique de l'invention, l'organe bistable comporte des moyens destinés à coopérer avec un outil pour le passage de la seconde position stable à la première position stable, le support comportant au moins une ouverture d'accès destinée au passage de l'outil.

La cale peut alors être démontée rapidement et facilement par un opérateur, notamment en cas de maintenance ou s'il est nécessaire de réaliser l'interversion de certaines des aubes afin de réduire le balourd.

L'organe élastique d'amortissement peut formé par au moins un plot en matériau élastique, par exemple en élastomère.

De plus, la forme et la masse de l'organe bistable sont déterminées de façon à ce que le passage de la première position stable à la seconde position stable s'effectue par centrifugation, par exemple par rotation de la roue à une vitesse supérieure à 2000 tours par minute.

L'invention concerne en outre un procédé de montage et d'équilibrage d'une roue à aubes du type précité, conformément à la revendication 10, caractérisé en ce qu'il comporte les étapes consistant à :
- monter les aubes et les cales en position de montage dans le ou les alvéoles du disque,
- faire tourner la roue à une vitesse suffisante pour déplacer les aubes par centrifugation dans une position de fonctionnement normal, et pour provoquer le passage de chaque organe bistable dans sa seconde position stable de manière à stabiliser les aubes dans leur position de fonctionnement,
- réduire le balourd de la roue, par exemple par démontage et interversion de certaines des aubes.

L'invention sera mieux comprise et d'autres détails, caractéristiques et avantages de l'invention apparaîtront à la lecture de la description suivante faite à titre d'exemple non limitatif en référence aux dessins annexés dans lesquels :
- la figure 1 est une vue partielle et en coupe d'une roue à aubes selon l'invention,
- la figure 2 est une vue en perspective, d'une cale équipant la roue à aubes selon l'invention,
- la figure 3 est une vue en perspective, d'une partie de la cale comprenant un organe élastique d'amortissement, selon une forme de réalisation de l'invention,
- la figure 4 est une vue correspondant à la figure 3, d'une variante de réalisation de l'invention,
- la figure 5 est une vue en perspective, d'une partie de la cale comprenant un organe bistable en position, selon une forme de réalisation de l'invention,
- la figure 6 est une vue en coupe transversale de la partie de la cale illustrée à la figure 5,
- la figure 7 est une vue correspondant à la figure 5, d'une variante de réalisation de l'invention.

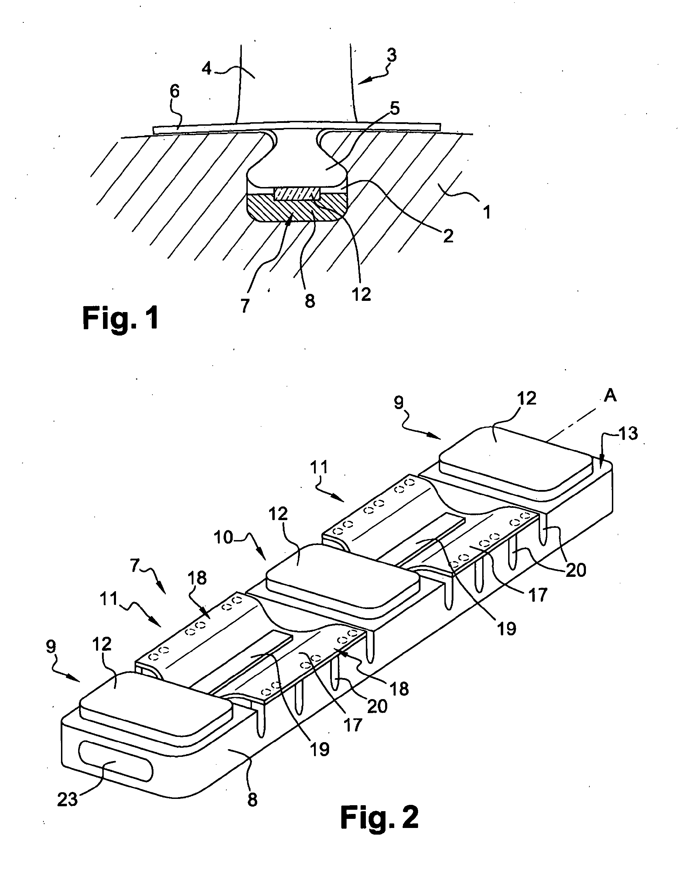

La figure 1 montre une roue à aubes de turbomachine, par exemple une roue de soufflante, comprenant un disque 1 dont la périphérie externe est formée avec une pluralité d'alvéoles 2 sensiblement axiaux.

Chaque aube 3 comporte une pale 4 et un pied 5 en queue d'aronde, qui est engagé dans un alvéole 2 du disque 1, l'alvéole ayant une forme complémentaire de celle du pied d'aube afin de retenir radialement l'aube 3 sur le disque 1. Les aubes 3 comportent également des plates-formes 6 qui sont contiguës pour définir une surface interne d'une veine de circulation de fluide, et qui sont situées radialement entre les pieds d'aubes 5 et les pales 4.

Une cale 7 est montée entre chaque pied d'aube et le fond de l'alvéole correspondant. Comme cela est mieux visible à la figure 2, la cale 7 comporte un support 8 de forme allongée, s'étendant sensiblement suivant l'axe A du disque 1 et de l'alvéole 2. Dans le mode de réalisation représenté, la cale 7 comporte globalement cinq zones, à savoir deux zones d'extrémité 9, une zone centrale 10, et deux zones médianes 11 situées respectivement entre les zones d'extrémité 9 et la zone centrale 10.

Des organes élastiques d'amortissement sont montés sur le support, dans les zones d'extrémité 9 et dans la zone centrale 10. Les organes d'amortissement sont des plots 12 en matériau élastomère, par exemple en EPDM ou en silicone.

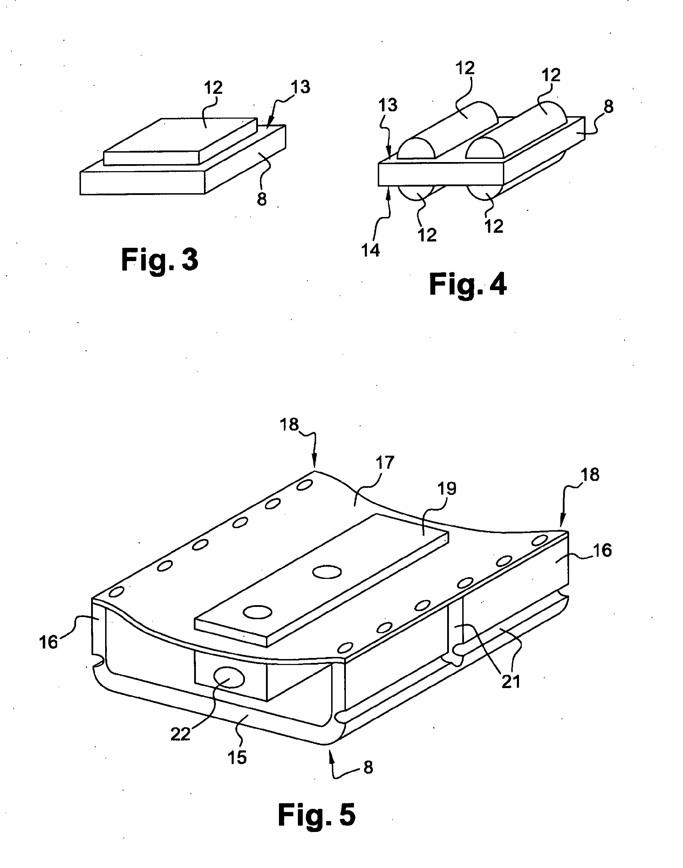

La figure 3 illustre schématiquement la zone centrale 10 d'une cale 7 selon une première forme de réalisation de l'invention, dans laquelle un seul plot 12, de forme générale parallélépipédique, est monté sur la surface externe 13 du support, tournée vers le pied d'aube.

La figure 4 illustre une autre forme de réalisation dans laquelle la face interne 14 (tournée vers le fond de l'alvéole 2) et la face externe 13 (tournée vers le pied d'aube 5) sont équipées chacune de deux plots 12 de forme hémicylindrique, orientés suivant l'axe A de la cale 7.

Bien entendu, d'autres configurations peuvent être envisagées, les formes de réalisation illustrées n'étant que des exemples possibles de réalisation.

Les zones médianes 11 sont, quant à elles, équipées d'organes bistables en position.

Plus particulièrement, le support 8 présente, dans chacune des zones médianes 11, une section en forme générale de U, comportant une base 15 tournée du côté du fond de l'alvéole 2 et à partir de laquelle s'étendent deux branches 16, une lame élastique 17 étant fixée par ses extrémités 18 aux branches 16.

La lame élastique 17 est du type bistable en position et elle peut occuper une première position stable de montage ou de démontage dans laquelle elle n'exerce pas d'effort sur le pied d'aube 5, et une seconde position stable dans laquelle elle exerce un effort radial sur le pied d'aube 5 pour immobiliser l'aube et la stabiliser dans une position finale, comme cela est connu du document FR 11/54301.

Une masselotte 19 est fixée par exemple par une vis ou par sertissage, dans une zone centrale de la lame élastique 17.

La forme et la masse de la lame élastique 17 et de la masselotte 19 sont déterminées de façon à ce que le passage de la première position stable à la seconde position stable se fasse automatiquement par centrifugation, par rotation de la roue à une vitesse supérieure à 2000 tours par minute.

La lame élastique 17 peut être réalisée en un matériau métallique présentant des caractéristiques mécaniques suffisantes et compatibles avec les températures atteintes dans les zones concernées. Cette lame 17 peut également être réalisée en un matériau à mémoire de forme, déformable par sollicitation mécanique, thermique ou électrique.

Dans la forme de réalisation de la figure 2, les branches 16 du support 8 comportent des fentes 20, orientées par exemple perpendiculairement à l'axe A, de manière à ajuster la raideur des branches 16 du support 8 en fonction des besoins.

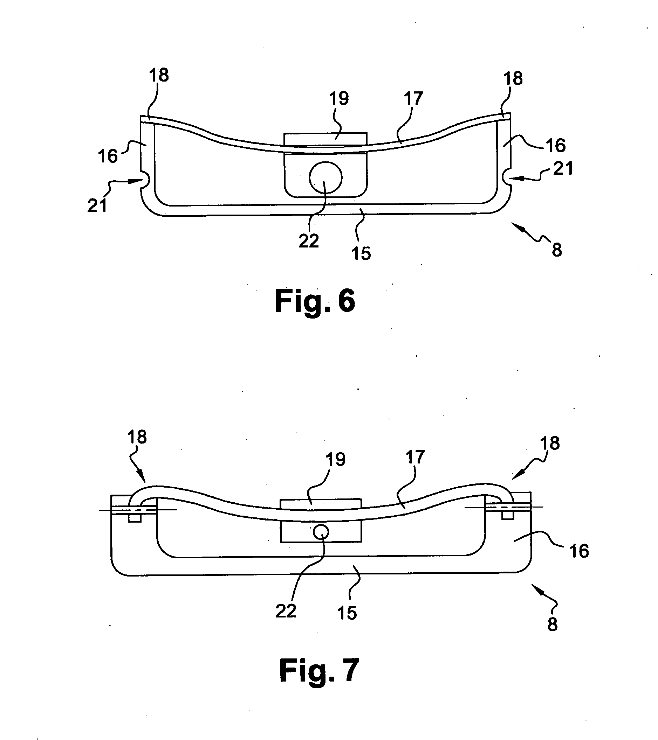

Dans une autre forme de réalisation illustrée aux figures 5 et 6, les branches 16 comportent des évidements ou des rainures 21 afin également d'ajuster la raideur desdites branches 16. Les rainures 21 peuvent par exemple être orientées parallèlement à l'axe A ou perpendiculairement à celui-ci.

La lame élastique 17 peut être fixée par soudage aux deux branches 16 (figures 2, 5 et 6) ou par tout autre moyen de fixation.

La figure 7 illustre par exemple une variante de réalisation dans laquelle les extrémités 18 de la lame élastique 17 sont recourbées en direction de la base 15 et fixées par encastrement aux branches 16. Cette solution peut notamment être privilégiée lorsque les matériaux de la lame élastique 17 et des branches 16 ne permettent pas d'effectuer une opération de soudage.

Les masselottes 19 sont équipées de trous 22 débouchants et orientés suivant l'axe de la cale. Les extrémités 9 du support 8 comportent en outre des ouvertures d'accès 23 (figure 2) permettant le passage d'un outil dont l'extrémité peut être introduite, au travers des ouvertures d'accès 23, dans les trous 22 des masselottes 19, afin de déplacer la lame élastique 17 de sa position de maintien de l'aube 3 vers sa position de démontage.

En variante, les alvéoles 2 peuvent être curvilignes. Dans ce cas, les cales 7 présentent non plus une forme générale rectiligne mais une forme générale curviligne, adaptée à la forme des alvéoles 2.

En outre, le nombre de zones 9, 10, 11, et donc le nombre d'organes bistables et d'organes d'amortissement, ainsi que leur disposition relative peuvent varier en fonction des contraintes de poids et des sollicitations mécaniques en jeu.

Un procédé de montage et d'équilibrage d'une roue à aubes selon l'invention va maintenant être décrit en détail.

Tout d'abord, les aubes 3 sont montées avec les cales 7 dans les alvéoles 2 du disque 1. Les lames élastiques 17 sont alors dans leur première position stable, c'est-à-dire dans leur position de montage et de démontage et n'exercent aucun effort sur les pieds d'aubes 5. Les plots 12 sont comprimés sous l'effort exercé par les pieds d'aubes 5, l'écrasement des plots 12 étant par exemple de l'ordre de 0,1 à 0,3 mm.

On fait ensuite tourner la roue à une vitesse suffisante pour amener les aubes 3 par centrifugation dans une position finale de fonctionnement et pour provoquer le passage de chaque lame 17 dans sa seconde position stable. Cette vitesse de rotation est par exemple de l'ordre de 2000 à 3000 tours par minute.

Lors de cette rotation, les lames élastiques 17 se déforment de leur première position stable vers leur seconde position stable dans laquelle la zone médiane de chacune des lames élastiques 17 est plaquée contre le pied d'aube 5 correspondant.

Lors de cette rotation également, les plots 12 assurent un certain maintien en position de l'aube 3, avant qu'elle ne soit maintenue par la lame élastique 17. Le déplacement de l'aube 3 est donc limité fortement lors de cette première mise en rotation, ce qui évite les dégradations du matériau abradable du carter externe.

Les lames élastiques 17, dans leur seconde position stable, appliquent sur les pieds d'aubes 5 un effort dirigé radialement vers l'extérieur, suffisant pour maintenir les aubes 3 en position de fonctionnement au ralenti ou à l'arrêt. Cet effort est déterminé de façon à compenser le poids de l'aube 3 ainsi que les effets inertiels se produisant au démarrage de la turbomachine.

La rotation de la roue peut ensuite être stoppée ou ralentie, les aubes 3 étant maintenues et stabilisées par les lames élastiques 17 dans leur position de fonctionnement.

Si nécessaire, on peut ensuite diminuer le balourd de la roue, par exemple par démontage et interversion de certaines des aubes 3. Pour cela, un opérateur peut déplacer les lames élastiques 17 vers leur position de démontage, à l'aide d'un outil, comme indiqué précédemment. Les cales 7 peuvent alors être retirées et remontées librement.

Dans une phase de fonctionnement, en cas de choc sur une ou plusieurs aubes 3, provoqué par l'ingestion d'un oiseau ou d'un corps solide, les plots 12 sont en mesure d'amortir suffisamment le déplacement des aubes concernées et d'encaisser suffisamment d'énergie pour éviter leur dégradation.

## Revendications

1. Roue à aubes de turbomachine, comprenant un disque (1) dont la périphérie externe est formée avec au moins un alvéole (2) de montage des pieds (5) des aubes (3), et une cale (7) montée entre chaque pied d'aube (5) et le fond de l'alvéole (2), la cale (7) comportant au moins un organe (17) du type bistable en position et qui peut occuper une première position stable de montage ou de démontage dans laquelle il n'exerce pas d'effort sur le pied d'aube (5) et une seconde position stable dans laquelle il exerce un effort radial sur le pied d'aube (5) pour immobiliser l'aube (3) et la stabiliser dans une position finale, **caractérisée en ce que** la cale (7) comporte en outre au moins un organe élastique d'amortissement (12) monté entre le fond de l'alvéole (2) et le pied d'aube (5), le pied d'aube (5) étant destiné à venir en appui contre ledit organe élastique d'amortissement (12), au moins avant que l'organe bistable (17) soit dans sa seconde position.

2. Roue à aubes selon la revendication 1, **caractérisée en ce qu'**elle comporte un support (8) de forme allongée, présentant au moins une première zone (9, 10) dans laquelle est monté l'organe élastique d'amortissement (12) et une seconde zone (11) dans laquelle est montée une lame élastique bistable (17), déformable entre les deux positions précitées.

3. Roue à aubes selon la revendication 2, **caractérisée en ce que** le support (8) présente, dans sa deuxième zone (11), une section en forme générale de U, comportant une base (15) du côté du fond de l'alvéole (2) et à partir de laquelle s'étendent deux branches (16), la lame élastique (17) étant fixée par ses extrémités auxdites branches (16).

4. Roue à aubes selon la revendication 3, **caractérisée en ce que** la lame élastique (17) comporte une masselotte (19).

5. Roue à aubes selon la revendication 3 ou 4, **caractérisée en ce que** les branches (16) du support (8) comportent des évidements (21) ou des fentes (20) de manière à limiter leur raideur.

6. Roue à aubes selon l'une des revendications 1 à 5, **caractérisée en ce que** l'organe bistable (17) est réalisé dans un matériau à mémoire de forme, déformable par sollicitation mécanique, thermique ou électrique.

7. Roue à aubes selon l'une des revendications 1 à 6, **caractérisée en ce que** l'organe bistable (17) comporte des moyens (22) destinés à coopérer avec un outil pour le passage de la seconde position stable à la première position stable, le support (8) comportant au moins une ouverture d'accès (23) destinée au passage de l'outil.

8. Roue à aubes selon l'une des revendications 1 à 7, **caractérisée en ce que** l'organe élastique d'amortissement est formé par au moins un plot (12) en matériau élastique, par exemple en élastomère.

9. Roue à aubes selon l'une des revendications 1 à 8, **caractérisée en ce que** la forme et la masse de l'organe bistable (17) sont déterminées de façon à ce que le passage de la première position stable à la seconde position stable s'effectue par centrifugation, par exemple par rotation de la roue à une vitesse supérieure à 2000 tours par minute.

10. Procédé de montage et d'équilibrage d'une roue à aubes selon l'une des revendications 1 à 9, **caractérisé en ce qu'**il comporte les étapes consistant à :
- monter les aubes (3) et les cales (7) en position de montage dans le ou les alvéoles (2) du disque (1),
- faire tourner la roue à une vitesse suffisante pour déplacer les aubes (3) par centrifugation dans une position de fonctionnement normal, et pour provoquer le passage de chaque organe bistable (17) dans sa seconde position stable de manière à stabiliser les aubes (3) dans leur position de fonctionnement,
- réduire le balourd de la roue, par exemple par démontage et interversion de certaines des aubes (3).

## Patentansprüche

1. Schaufelrad für eine Turbomaschine bzw. ein Turbotriebwerk, enthaltend eine Scheibe (1), deren Außenumfang mit zumindest einer Aussparung (2) zum Lagern der Schaufelfüße (5) der Schaufeln (3) und einem Keil (7) ausgebildet ist, der zwischen jedem Schaufelfuß (5) und dem Boden der Aussparung (2) gelagert ist, wobei der Keil (7) zumindest ein in Stellung bistabil ausgeführtes Glied (17) aufweist, das eine erste stabile Montage- bzw. Demontagestellung einnehmen kann, in welcher es keine Kraft auf den Schaufelfuß (5) ausübt, sowie eine zweite stabile Stellung, in welcher es eine radiale Kraft auf den Schaufelfuß (5) ausübt, um die Schaufel (3) festzulegen und sie in einer Endstellung zu stabilisieren, **dadurch gekennzeichnet, dass** der Keil (7) ferner zumindest ein elastisches Dämpfungsglied (12) aufweist, das zwischen dem Boden der Aussparung (2) und dem Schaufelfuß (5) gelagert ist, wobei der Schaufelfuß (5) dazu bestimmt ist, in Anlage an das elastische Dämpfungsglied (12) zumindest dann zu gelangen, bevor das bistabile Glied (17) sich in seiner zweiten Stellung befindet.

2. Schaufelrad nach Anspruch 1, **dadurch gekennzeichnet, dass** sie einen Träger (8) langgestreckter Form aufweist, der zumindest einen ersten Bereich (9, 10) aufweist, in welchem das elastische Dämpfungsglied (12) gelagert ist, sowie einen zweiten Bereich (11), in welchem ein bistabiler elastischer Steg (17) gelagert ist, der zwischen den beiden vorgenannten Stellungen verformbar ist.

3. Schaufelrad nach Anspruch 2, **dadurch gekennzeichnet, dass** der Träger (8) in seinem zweiten Bereich (11) einen U-förmigen Querschnitt aufweist, der ein Basisteil (15) auf der Seite des Bodens der Aussparung (2) enthält, von dem aus sich zwei Schenkel (16) erstrecken, wobei der elastische Steg (17) mit seinen Enden an die Schenkel (16) befestigt ist.

4. Schaufelrad nach Anspruch 3, **dadurch gekennzeichnet, dass** der elastische Steg (17) ein Ausgleichsgewicht (19) aufweist.

5. Schaufelrad nach Anspruch 3 oder 4, **dadurch gekennzeichnet, dass** die Schenkel (16) des Trägers (8) Ausnehmungen (21) oder Schlitze (20) aufweisen, so dass deren Steifigkeit begrenzt wird.

6. Schaufelrad nach einem der Ansprüche 1 bis 5, **dadurch gekennzeichnet, dass** das bistabile Glied (17) aus einem Material mit Formgedächtnis ausgeführt ist, das durch mechanische, thermische oder elektrische Beaufschlagung verformbar ist.

7. Schaufelrad nach einem der Ansprüche 1 bis 6, **dadurch gekennzeichnet, dass** das bistabile Glied (17) Einrichtungen (22) aufweist, die dazu bestimmt sind, mit einem Werkzeug für den Übergang aus der zweiten stabilen Stellung in die erste stabile Stellung zusammenzuwirken, wobei der Träger (8) zumindest eine Zugangsöffnung (23) aufweist, die für den Durchtritt des Werkzeugs bestimmt ist.

8. Schaufelrad nach einem der Ansprüche 1 bis 7, **dadurch gekennzeichnet, dass** das elastische Dämpfungsglied aus zumindest einem Zapfen (12) aus elastischem Material, beispielsweise aus Elastomer, ausgebildet ist.

9. Schaufelrad nach einem der Ansprüche 1 bis 8, **dadurch gekennzeichnet, dass** die Form und die Masse des bistabilen Glieds (17) so bestimmt sind, dass der Übergang aus der ersten stabilen Stellung in die zweite stabile Stellung durch Zentrifugieren, beispielsweise durch Drehen des Rads mit einer Geschwindigkeit von über 2000 Umdrehungen pro Minute, erfolgt.

10. Verfahren zum Montieren und Auswuchten eines Schaufelrads nach einem der Ansprüche 1 bis 9, **dadurch gekennzeichnet, dass** es die nachfolgenden Schritte umfasst:
- Montieren der Schaufeln (3) und Keile (7) in Lagerungsstellung in der bzw. den Aussparungen (2) der Scheibe (1),
- Drehen des Rads mit einer Geschwindigkeit, die ausreicht, um die Schaufeln (3) durch Zentrifugieren in eine normale Betriebsstellung zu verlagern und den Übergang eines jeden bistabilen Glieds (17) in seine zweite bistabile Stellung so hervorzurufen, dass die Schaufeln (3) in ihrer Betriebsstellung stabilisiert werden,
- Vermindern der Unwucht des Rads, beispielsweise durch Demontieren und Umstellen von einigen der Schaufeln (3).

## Claims

1. A bladed rotor wheel for a turbine engine, the rotor wheel comprising a disk (1) having formed in its outer periphery at least one slot (2) for assembling roots (5) of blades (3), and a spacer (7) mounted between each blade root (5) and the bottom of the slot (2), the spacer (7) including at least one member (17) of the type that is bistable in position and that can occupy a first stable position for assembly or disassembly in which it does not exert force on the blade root (5), and a second stable position in which it exerts a radial force on the blade root (5) for holding the blade (3) stationary and stabilizing it in a final position, **characterized in that** the spacer (7) also includes at least one resilient damper member (12) mounted between the bottom of the slot (2) and the blade root (5), the blade root (5) being designed to bear against said resilient damper member (12), at least prior to the bistable member (17) occupying its second position.

2. A rotor wheel according to claim 1, **characterized in that** it comprises a support (8) of elongate shape, having at least a first zone (9, 10) in which the resilient damper member (12) is mounted and a second zone (11) in which a bistable resilient strip (17) is mounted, the strip being deformable between the two above-mentioned positions.

3. A rotor wheel according to claim 2, **characterized in that** the support (8), in its second zone (11), has a generally U-shaped section having a base (15) beside the bottom of the slot (2) with two branches (16) projecting therefrom, the spring (17) being fastened via its ends to said branches (16).

4. A rotor wheel according to claim 3, **characterized in that** the spring (17) includes a flyweight (19).

5. A rotor wheel according to claim 3 or claim 4, **characterized in that** the branches (16) of the support (8) include grooves (21) or notches (20) in order to limit their stiffness.

6. A rotor wheel according to any one of claims 1 to 5, **characterized in that** the bistable member (17) is made of a shape memory material that is deformable by mechanical, thermal, or electrical stress.

7. A rotor wheel according to any one of claims 1 to 6, **characterized in that** the bistable member (17) includes means (22) for co-operating with a tool for causing it to pass from the second stable position to the first stable position, the support (8) including at least one access opening (23) for passing the tool.

8. A rotor wheel according to any one of claims 1 to 7, **characterized in that** the resilient damper member is in the form of at least one pad (12) of resilient material, e.g. of elastomer.

9. A rotor wheel according to any one of claims 1 to 8, **characterized in that** the shape and the mass of the bistable member (17) are determined so that it is caused to pass from the first stable position to the second stable position by centrifuging, e.g. by rotating the wheel at a speed greater than 2000 rpm.

10. A method of assembling and balancing a rotor wheel according to any one of claims 1 to 9, the method being **characterized in that** it comprises the steps consisting in:
· assembling the blades (3) and the spacers (7) in an assembly position in the slot(s) (2) of the disk (1);
· rotating the wheel at a speed that is sufficient to cause the blades (3) to move by centrifuging into a normal operating position, and to cause each bistable member (17) to pass into its second stable position so as to stabilize the blades (3) in their operating positions; and
· reducing the unbalance of the wheel, e.g. by disassembling and interchanging certain blades (3).
